# EUROPEAN PATENT SPECIFICATION

(11) **EP 2 367 717 B1**
(45) Date of publication and mention of the grant of the patent: **25.09.2013**
(21) Application number: 09768439.3
(22) Date of filing: 02.12.2009
(51) Int. Cl.: B63B 1/38

(54) **POSITIVE PRESSURE MICRO BUBBLE GENERATOR**
ÜBERDRUCK-MIKROBLASENERZEUGER
GÉNÉRATEUR DE MICROBULLES À PRESSION POSITIVE

(30) Priority: 02.12.2008 EP 08170457
(43) Date of publication of application: 28.09.2011
(73) Proprietor: DK Group (ACS) B.V., 1185 VB Amstelveen (NL)
(72) Inventor: Winkler, Jørn, Paul, Curaçao (AN)
(74) Representative: Nederlandsch Octrooibureau
(86) International application number: PCT/NL2009/050734
(87) International publication number: WO 2010/064911

(56) References cited:
- WO-A-99/28180
- WO-A-2005/077746
- US-A- 3 288 100
- US-A- 5 146 863

## Description

### Field of the invention

The invention relates to a method of generating a layer of bubbles along the hull of a vessel for reducing its frictional drag in the water. The invention also relates to a vessel having a bubble-generating device for generating a plurality of bubbles on the hull surface.

### Background of the invention

Such a method and vessel are known from US patent no. 6,789,491 describing how a layer of micro bubbles is generated by means of a winged air induction pipe system (WAIP). A layer of micro bubbles having a diameter, which may be as small as 10 micrometers, is generated by drawing atmospheric air into a low pressure region in a cavity near the bottom of the vessel. The low pressure region directs the air flow of atmospheric air, via a pipe over a wing that is attached in the cavity near the bottom of the hull. The forward movement of the vessel generates a suction force over the wing and draws in atmospheric air over the wing's upper surface. At the water-air interface over the wing, the water flowing rapidly towards the stern causes a so-called Kelvin Helmholtz Instability which results in a mixing of air and water and in a subsequent generation of micro bubbles. The size of these micro bubbles does not change, unlike bubbles generated by compressed air, once injected into the water and they form a layer covering a large surface area of the hull extending from bow to stern. In this way energy savings in propulsion of up to 15% can be achieved.

It is also known to mount multiple air bubble generating nozzles on the hull, to which air is supplied via a compressor. These nozzles have a slit-like geometry and act as micro bubble generators. The disadvantage of active air compression is an increase in energy consumption compared to the low pressure generation using a winged air induction pipe (WAIP) system.

It is an object of the present invention to provide a method for generating bubbles on the hull of a vessel, and a vessel having a bubble generator providing an increased reduction in drag.

It is another object of the invention to provide a method for generating micro bubbles and to reduce frictional drag in ocean going cargo vessels of relatively large displacements, while maintaining the available cargo space as large as possible.

It is a further object of the invention to provide a method for generating bubbles on the hull of the vessel, and a vessel having a bubble generator, which can be adapted to prevailing sea states.

It is again another object of the invention to provide a method for generating bubbles on the hull of the vessel, and a vessel having a bubble generator, which has an increased efficiency.

### Summary of the invention

To meet these objectives, the present invention provides a method of generating a layer of bubbles on a hull of a vessel comprising the steps of:
- providing a cavity at the bottom of the vessel, having a length of at least 1 m and no longer than 30 % of the vessel length L along the bottom, preferably no longer than 25%, most preferably no longer than 10% of the vessel length L, and having a top surface spaced at least 50 cm away from the bottom plane, preferably at least 1 m away from the bottom plane,
- providing air into the cavity via a compressor device at a pressure higher than atmospheric pressure to at least partially empty the cavity of water,
- providing a rippling water-air interface in the cavity for forming a mixing region,
- generating a plurality of air bubbles in the mixing region, and
- providing a bubble outlet at or near the rear of the cavity for allowing the bubbles to flow out along the hull towards the rear of the vessel.

The cavity near the bottom is at least partially emptied of water by the pressurized air injected into the cavity. Such air cavities have been developed by the applicant and are described for instance in EP1501719 and WO2007/136269 to provide an increased efficiency in propulsion for cargo vessels under sea going conditions. The inventors have realized that the air cavities developed for reduction of the wetted hull surface, function in a surprising and unexpected way as a generator for relatively small sized bubbles and micro bubbles.

It has appeared that upon injection of air at a pressure corresponding to the draft of the cavity (about 1 bar per 10 m of draft level), a turbulent water-air interface is formed functioning as a mixing region in which the water is saturated with air. Upon entrainment of the water-air mixture from the cavity at the rear, the water-air mixture is ejected from an outlet region situated near the lower rear side of the cavity. It has appeared that from the outlet point, bubbles spread across a large surface area of the hull such as between 20% - 40% of the wet hull surface and remain of substantially constant size of between 0.1 µm and 100 µm. In this way a reduction in frictional drag can be achieved in a relatively simple and cost-effective manner.

The cavity for generating the bubbles according to the invention is of a larger dimensions than the small-sized cavities that are disclosed in US patent no. 6,789,491 but is of smaller size than the cavities used in the air cavity vessels according to EP1501719 and WO2007/136269. Hence the available cargo space in the vessels according to the present invention is increased.

The simple design of the bubble generator according to the invention allows easy retrofit on existing vessels by providing a cavity of relatively small dimensions at the bottom of the hull.

By using an air cavity according to the present invention, the air cavity fills with air reducing the wetted area of the hull for reduced frictional drag while at the same time generating small sized bubbles of a size of between 10 µm and 1 mm.

The small bubbles exit from the cavity via the bubble outlet near the rear and are distributed over a large hull surface area so as to further reduce frictional drag. Hereby energy savings for propulsion of up to 15% can be achieved.

According to the present invention it is possible to use the pressurized air that is introduced into the air cavity for expulsion of the water from the cavity as the air supply for generating the micro bubbles. In a preferred embodiment this air is introduced at the forward end of the cavity. Alternatively, in addition to the pressurized air supply for expulsion of water from the cavity, separate bubble generating devices may be employed in the cavity having a separate air supply connected to these devices. The bubble generating devices may comprise air pipes or nozzles, wing-shaped (WAIP) devices, perforated plates or any other bubble generating means.

The compressor device of the present invention can be connected to a control unit for selectively providing air into the cavity at a higher pressure than the air pressure inside the cavity for maintaining a predetermined water level inside the cavity. Sensors are provided in the cavity for monitoring the water level and providing input signals to the control unit. When waves expel air from the cavity, the compressor device is activated to increase the air flow to the cavity to expel the water and to maintain a sufficient dry environment. A second air supply means extends to the cavity for supplying air into the cavity to the bubble generating means at a substantially continuous rate such that a constant stream of bubbles is generated for covering the hull.

Preferably the bubble generating conditions according to the invention are such that the bubbles that are formed in the mixing zone of the cavity have a size of between 10 µm and 1 mm. Preferably the pressure of the air introduced into the cavity is controlled to be at least slightly higher than or about as high as the air pressure inside the cavity. In an embodiment, the speed of the water inside the cavity is between about equal to the forward speed of the vessel. The inflow speed of the air at the forward end of the cavity is very low, preferably close to 0 meters per second.

The cavity may have a bubble outlet that is formed at a rear end of a sloping top surface of the cavity sloping downwards from a top surface height towards the bottom plane in a rearward direction seen along the bottom plane. In this way, the bubbles are forced in a wedge-shaped space at the rear of the cavity where they can exit near the level of the bottom of the hull with a relatively high rearward (relative) velocity such as to cover the parts of the hull downstream from the cavity.

In a further embodiment, a bubble generating device is situated in a partition region between two cavities that are situated side by side, an air supply being connected to the bubble generating device for providing air to the generating device to produce a plurality of small bubbles. When the bubbles covering the hull start to travel sideways in order to rise to the water surface, they migrate along the hull to enter back into the air cavities to replenish any air lost from these air cavities. In this way a recovering of the air bubbles can be obtained resulting in increased efficiency of the air bubble lubrication system (Recycled Air Lubrication system).

In a further embodiment of a bubble generating system of the present invention, at least two bubble generating devices are situated in the cavity, spaced at a mutual distance in the length direction of the vessel. In this way, the small sized bubbles are generated on the inside slope of the cavity for extra internal lubrication of the cavity and upon exiting from the cavity for lubrication of the external hull surface. Under mild weather conditions the bubble generating device that is closest to the bottom of the hull is operative, while during higher sea states, the bubble generating device closest to the top of the cavity is active, while the bubble generating device closest tot the hull bottom is inoperative and may be closed by an individually operatable valve.

### Brief description of the drawings

Some embodiments of a vessel comprising a bubble generating system according to the present invention will by way of example be described in detail with reference to the accompanying drawings.

In the drawings:
Fig. 1 shows a schematic side view of a vessel comprising a bubble generating device according to the present invention,
Fig. 2 shows a schematic side view of an air cavity vessel having multiple bubble generating devices situated on a sloping top surface of the air cavity,
Fig. 3 shows a bottom view of an air cavity vessel having two parallel air cavities and bubble generating devices situated between the air cavities,
Fig. 4 shows schematic transverse cross-sectional view of the air cavity vessel of fig. 3 showing two air supply ducts,
Fig. 5 shows an enlarged detail of an air cavity comprising three bubble generating devices arranged on a sloping cavity top surface,
Fig. 6 shows a side view of a wing-shaped bubble generator,
Fig. 7 shows a bottom cross-sectional view of the bubble generator of fig. 6, and
Fig. 8 a schematic side view of an adjustable wing-shaped bubble generator.

### Detailed description of the invention

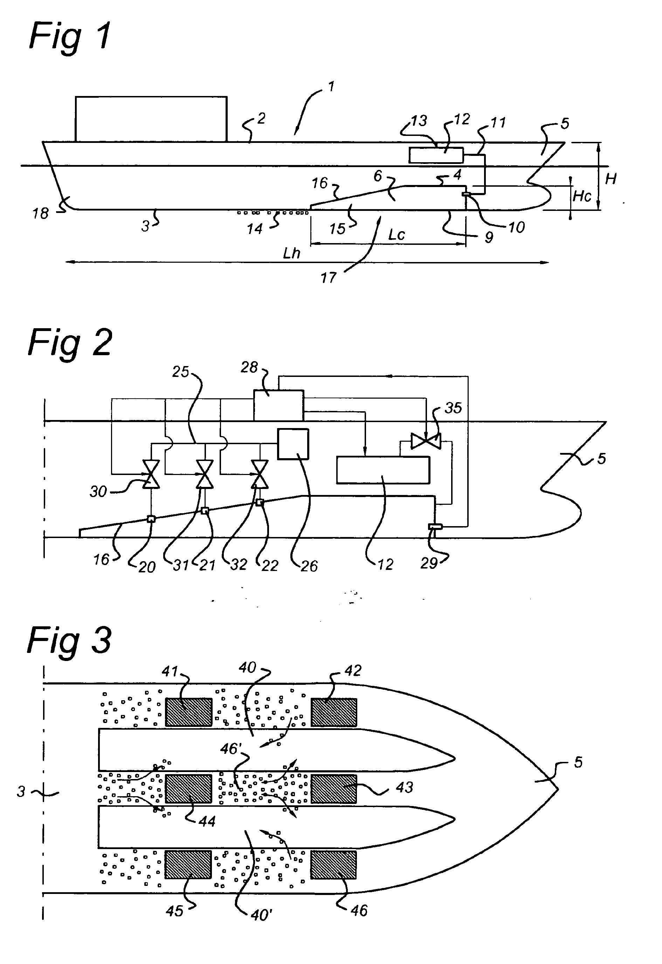

Fig. 1 shows a vessel 1 with a hull 2 and a bottom surface 3. The vessel I has a length Lₕ of for instance between 50 m and 300 m, measured along the bottom surface 3. The vessel has a height H measured from keel level to deck level of for instance between 10m and 40 m. Near a bow 5 of the vessel a cavity 6 is formed extending upward from the bottom surface 3. The cavity 6 has a length L_{c} which is relatively short compared the vessel length L and which may for instance lie between 5m and 30m. The cavity has a height H, measured from the bottom surface 3 to a top surface 4, which may be between 50 cm and for instance 5m.

Near a front end 9 of the cavity 6, an air inlet 10 is provided, connected to an air supply duct 11. A compressor 12 takes in atmospheric air through a duct 13 and supplies compressed air to the cavity 6 in order to expel water from the cavity. The air is controlled to be at an overpressure compared to the pressure prevailing inside the cavity 6, which pressure depends on the draft of the vessel 1.

It was found that a rippling air-water surface is formed inside the cavity 6 that defines a mixing zone in which water is saturated with air. The moving water across the water-air interface in the cavity 6 results in a Kelvin-Helmholtz Instability and forms small-sized bubbles 14. These bubbles have a diameter of between 10µm and 1 mm and escape via a bubble outflow region 15 near the rear part of the cavity 6. In the rear part, the cavity has a downwardly sloping top surface 16, forming a wedge-shaped space near the rear 17 of the cavity. From this outflow region 15, the bubbles spread towards the aft 18 of the hull 2, to cover a majority of the bottom surface 3.

In the embodiment of figure 2, three bubble generating devices 20, 21, 22 are provided in the sloping top surface 16. A second air supply duct 25 connects a second compressor 26 to each generating device for supplying air at a substantially constant rate. The bubble generating device 20-22 may comprise a tube, a perforated plate, a wing-shaped element or any other suitable bubble generating device of the type such as described in US patent application no's 2001/0022152, US 2003/0097971 or US patent no. 6,789,491.

The compressor 12 and/or the valve 35 are controlled by a control unit 28 to supply air to the cavity 6, depending on the water level inside the cavity that is monitored via a level sensor, the output of which is transferred tot the control unit 28. Each bubble generating device 20, 21, 22 is connected to the second air supply duct 25 via a respective valve 30, 31, 32 that is controlled by the control unit 28. When sea conditions are stormy, the water level inside the cavity 6 will be relatively high, such that bubble generating devices 20, 21 and 22 can all be active, the valves 30, 31, 32 being opened. At milder sea states the water level in the cavity will be lower and the valve 32 will be closed so as to inactivate bubble generating device 22. When the sea is flat, the water level in the cavity 6 will be low and only bubble generator 20 will be active, the valve 30 being opened and the valves 31, 32 being closed. The air bubbles covering the inside surface of the cavity cause a substantial reduction in frictional drag of the air cavity.
Figure 3 shows a bottom view of a vessel 1 of the hull having two parallel air cavities 40, 40'. Bubble generating devices 41, 42,45 and 46 generate bubbles covering the side parts of the bottom surface 3. The bubble generating devices 43,44 are situated in a central part 46¹ between the air cavities 40, 40'. The bubbles that travel upwards from the side parts of the bottom surface 3 and from the central part 46¹ are at least partly recovered in the cavities 40, 40' and replenish the volume of air in these cavities.

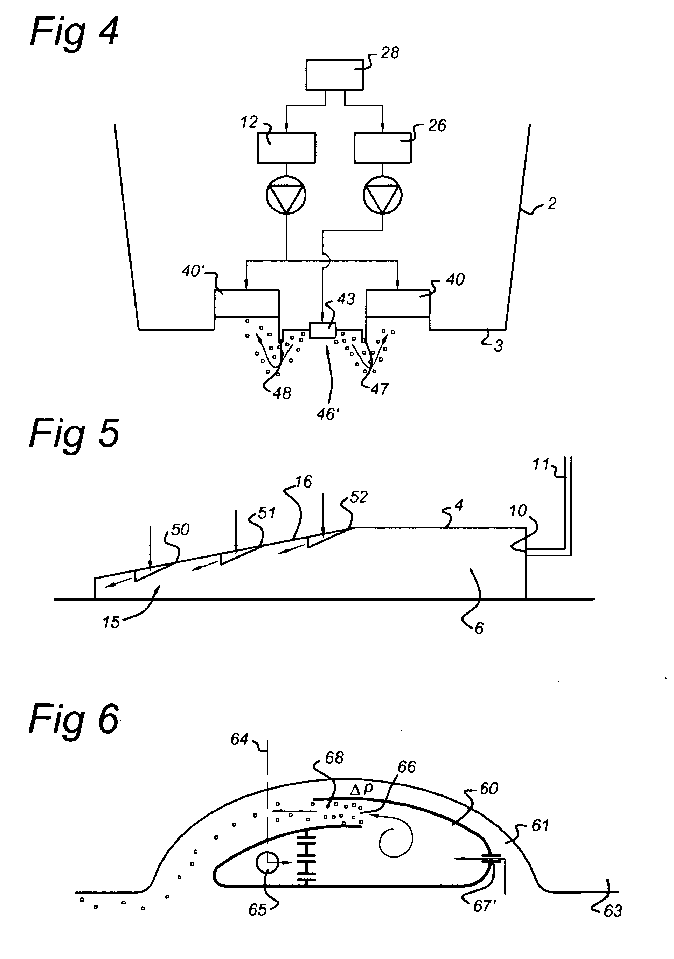

Figure 4 shows a schematic cross-sectional view of the air cavities of figure 4, wherein in the central region 46¹, the air bubbles are trapped between two walls 47,48 that are provided on the central region. The compressor 26 provides a constant flow of air to the bubble generating device 43. The cavities 40, 40'are each connected to the compressor 12 which maintains the water level inside the cavities substantially constant under control of unit 28.

In the embodiment of figure 5, the bubble generating devices 50,51 and 52 are formed by wedge-shaped air slits in the sloping top surface 16 of the cavity 6. The outflow region 15 is formed by the region in which the sloping top surface 16 is situated near the bottom 3.

Figure 6 shows a wing-shaped bubble generating device 60 situated inside a cavity 61 in the hull 63. The bubble generating device 60 defines a mixing chamber 66 and comprises an air duct 64 and a compressor 65 for injecting air into the hollow wing-shaped space. Water is entered into the mixing chamber 66 via openings 67 in the front surface of the device 60. Bubbles generated in the mixing chamber exit through an opening 68 and travel rearward (to the left-hand side in the drawing) to cover the bottom surface of the hull. A low pressure region is formed over the wing-shaped element with a slight under pressure Δp.

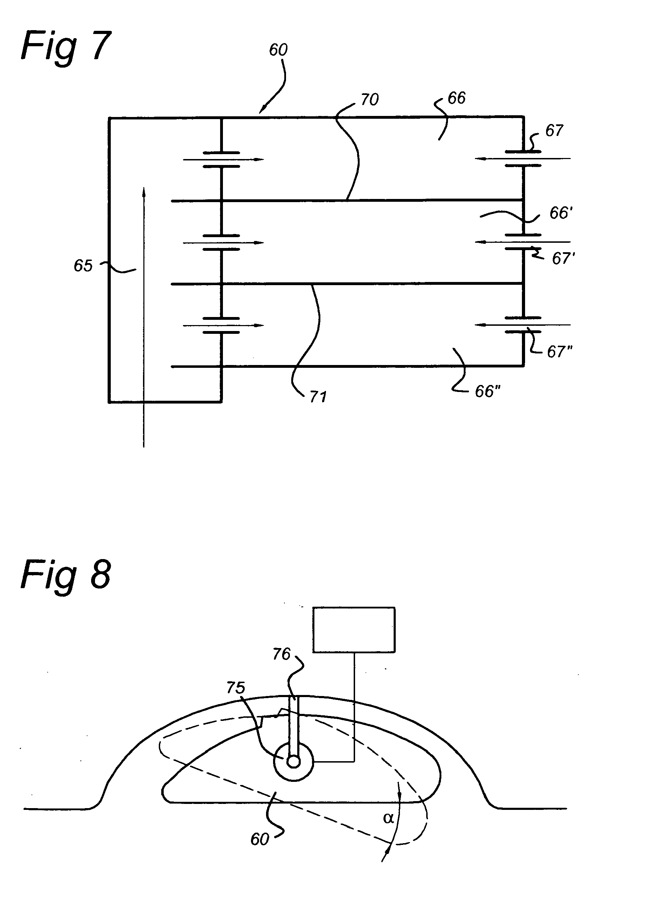

In figure 7, the partitioning walls 70,71 of the bubble generating device can be seen, directing the air flow from the compressor 65 to individual mixing regions 66, 66", 66" which communicate with respective water inlet nozzles 67, 67', 67". As can be seen from fig. 8, the tilting angle α can be varied by a rotational drive member 75 which can pivot the wing-shaped bubble generator 60 on its vertical support struts 76,
depending on the draft and/or wave conditions.

## Claims

1. Method of generating a layer of bubbles (14) on a hull (2) of a **displacement** vessel comprising the steps of:
- providing a cavity (6) at the bottom **surface** (3) of the vessel (1), having a length of at least 1 m and no longer than 30 % of the vessel length L along the bottom, preferably no longer than 25%, most preferably no longer than 10% of the vessel length L, and having a top surface spaced at least 50 cm away from the bottom **surface (3)**, preferably at least 1 m away from the bottom **surface (3)**,
- providing air into the cavity via a compressor device (12) at a pressure higher than atmospheric pressure to at least partially empty the cavity of water, **characterised by**
- providing a water-air interface **surface** in the cavity forming a mixing region,
- generating a plurality of air bubbles in the mixing region, and
- providing a bubble outlet (15) at or near the **lower** rear (17) **side** of the cavity (6) for allowing the bubbles to flow out **from the mixing region** along the **bottom surface (3)** towards the rear of the vessel.

2. Method according to claim 1, wherein the bubbles have a size of between 10 micrometers and 1 mm.

3. Method according to claim 1 or 2, wherein the bubble outlet (15) is formed at a rear end of a sloping top surface (16) of the cavity (6) sloping downwards from a top surface height towards the bottom plane in a rearward direction seen along the bottom plane.

4. Method according to claim 1,2 or 3, wherein the pressure of the air introduced into the cavity is controlled to be at least about as high as the air pressure inside the cavity.

5. Method according to claim 1,2,3 or 4, wherein the speed of the water inside the cavity is about as high as a forward speed of the vessel.

6. **Displacement** vessel (1) having a hull (2) with a bottom surface (3) and a cavity (6, 40, 40¹) extending upward from the bottom surface **(3)** to a top surface spaced at least 50 cm away from the top surface and extending up to a the height of no more than 10 % of a height Hₑ of the vessel, and having a length larger than 1 m and no longer than 30 % of the vessel length L along the bottom, preferably no longer than 25%, most preferably no longer than 10% of the vessel length L, a compressor device (12) for providing air into the cavity (16) **at a substantially constant rate and at** a higher pressure than the air pressure in the cavity to at least partially empty the cavity of water, **for forming a water-air interface surface** in the cavity **forming** a mixing region L for generating a plurality of small size bubbles in the mixing region, and having a bubble outlet (15) at or near a **lower** rear end (17) of the cavity for allowing the bubbles to flow out along the **bottom surface (3)** towards the rear of the vessel.

7. Vessel according to claim 6, wherein the top surface (16) slopes downward from a top surface height towards the bottom plane in a rearward direction seen along the bottom plane, to a bubble outflow region.

8. Vessel (1), **according to claim 6 or 7**, a control unit (28) **being** connected to the compressor device **(12)** for selectively providing air into the cavity at a higher pressure than the air pressure in the cavity for maintaining a predetermined water level inside the cavity, a second air supply means (20, 21, 22, 25, 26) extending to the mixing region of the cavity for supplying air into the mixing region at a substantially continuous rate.

9. Vessel (1) **according to claim 6, 7 or 8, two** cavities being situated side by side and separated by a partition region (46'), a bubble generating device (43, 44) being situated in the partition region (46'), an air supply (26) being connected to the bubble generating device for providing air to the generating device (43, 44) to produce a plurality of small bubbles.

10. Vessel (1) according to claim 5, 6, 7 or 8, wherein at least two bubble generating devices (20, 21, 22, 50, 51, 52) are situated in the cavity, spaced at a mutual distance in the length direction of the vessel.

11. Vessel according to claim 10, each bubble generating device comprising an air supply being individually closeable via a valve (30, 31, 32).

12. Vessel according to any of claims **6-11**, comprising a curved bubble generating member (60) inside the cavity (61).

13. Vessel according to claim **12**, the curved bubble generating member (60) being hingingly connected to the hull, connected to a drive member (75) for varying a position of the member.

## Patentansprüche

1. Verfahren zum Erzeugen einer Blasenschicht (14) auf einem Rumpf (2) eines Verdrängungs-Schiffs, das die folgenden Schritte umfasst:
- Bereitstellen eines Hohlraums (6) an der BodenFläche (3) des Schiffs (1), der eine Länge von mindestens 1 m und nicht mehr als 30 % der Schiffslänge L entlang des Bodens hat, vorzugsweise nicht länger als 25 %, noch bevorzugter nicht länger als 10 % der Schiffslänge L, und der eine obere Fläche hat, die einen Abstand von mindestens 50 cm von der Bodenfläche (3) hat, vorzugsweise mindestens 1 m von der Bodenfläche (3) entfernt,
- Einbringen von Luft in den Hohlraum durch eine Kompressorvorrichtung (12) mit einem Druck, der größer als atmosphärische Druck ist, um zumindest teilweise den Hohlraum von Wasser zu befreien,
**gekennzeichnet durch**
- Bereitstellen einer Luft-Wasser-Grenzfläche im Hohlraum, die einen Mischbereich bildet,
- Erzeugen mehrerer Luftblasen im Mischbereich,
und
- Bereitstellen eines Blasenauslasses (15) an der oder in der Nähe der unteren Rückseite (17) des Hohlraums (6), so dass die Blasen aus dem Mischbereich entlang der Bodenfläche (3) zur Rückseite des Schiffs strömen können.

2. Verfahren nach Anspruch 1, wobei die Blasen eine Größe zwischen 10 Mikrometern und 1 mm haben.

3. Verfahren nach Anspruch 1 oder 2, wobei der Blasenauslass (15) an einem hinteren Ende einer geneigten oberen Fläche (16) des Hohlraums (6) gebildet wird, die sich von einer oberen Flächenhöhe in Richtung auf die Bodenebene in einer rückwärtigen Richtung neigt, bei Betrachtung entlang der Bodenebene.

4. Verfahren nach Anspruch 1, 2 oder 3, wobei der Druck der Luft, die in den Hohlraum eingebracht wird, so gesteuert wird, dass er mindestens etwa so hoch ist wie der Luftdruck im Hohlraum.

5. Verfahren nach Anspruch 1, 2, 3 oder 4, wobei die Geschwindigkeit des Wassers im Hohlraum etwa so hoch ist wie die Fahrgeschwindigkeit des Schiffs.

6. Verdrängungsschiff (1), das einen Rumpf (2) mit einer Bodenfläche (3) und einen Hohlraum (6, 40, 40') hat, der sich von der Bodenfläche (3) bis zu einer oberen Fläche nach oben erstreckt, die einen Abstand von mindestens 50 cm von der oberen Fläche hat und sich bis zu einer Höhe von nicht mehr als 10 % einer Höhe Hₑ des Schiffs erstreckt, und die eine Länge von mehr als 1 m und nicht mehr als 30 % der Schiffslänge L entlang des Bodens hat, vorzugsweise nicht länger als 25 %, noch bevorzugter nicht länger als 10 % der Schiffslänge L, eine Kompressorvorrichtung (12) zum Einbringen von Luft in den Hohlraum (16) mit einer im Wesentlichen konstanten Rate und bei einem höheren Druck als der Luftdruck im Hohlraum, um zumindest teilweise den Hohlraum von Wasser zu befreien, zum Bilden einer Wasser-Luft-Grenzfläche im Hohlraum, die einen Mischbereich L zum Erzeugen mehrerer kleiner Blasen im Mischbereich bildet, und der einen Blasenauslass (15) am oder in der Nähe eines unteren Hinterendes (17) des Hohlraums hat, um die Blasen entlang der Bodenfläche (3) zur Rückseite des Schiffs strömen zu lassen.

7. Schiff nach Anspruch 6, wobei die obere Fläche (16) von einer oberen Flächenhöhe zur Bodenebene in rückwärtiger Richtung, bei Betrachtung entlang der Bodenebene, nach unten geneigt ist, bis zu einem Blasenausströmbereich.

8. Schiff (1) nach Anspruch 6 oder 7, wobei eine Steuerungseinheit (28) mit der Kompressorvorrichtung (12) verbunden ist, um selektiv Luft in den Hohlraum bei einem höheren Druck als dem Luftdruck im Hohlraum einzubringen, zum Aufrechterhalten eines vorgegebenen Wasserspiegels im Hohlraum, wobei sich ein zweites Luftzufuhrmittel (20, 21, 22, 25, 26) bis zum Mischbereich des Hohlraums für die Zufuhr von Luft zum Mischbereich mit einer im Wesentlichen kontinuierlichen Rate erstreckt.

9. Schiff (1) nach Anspruch 6, 7 oder 8, wobei zwei Hohlräume nebeneinander angeordnet und durch einen Trennbereich (46) getrennt sind, eine Blasenerzeugungsvorrichtung (43, 44) sich im Trennbereich (46) befindet, eine Luftzufuhr (26) mit der Blasenerzeugungsvorrichtung zum Bereitstellen von Luft für die Erzeugungsvorrichtung (43, 44) verbunden ist, um mehrere kleine Blasen zu erzeugen.

10. Schiff (1) nach Anspruch 5, 6, 7 oder 8, wobei mindestens zwei Blasenerzeugungsvorrichtungen (20, 21, 22, 50, 51, 52) sich im Hohlraum befinden, die mit Abstand zueinander in der Längsrichtung des Schiffs angeordnet sind.

11. Schiff nach Anspruch 10, wobei jede Blasenerzeugungsvorrichtung eine Luftzufuhr aufweist, die individuell über ein Ventil (30, 31, 32) geschlossen werden kann.

12. Schiff nach einem der Ansprüche 6-11, das ein gekrümmtes Blasenerzeugungselement (60) im Innern des Hohlraums (61) aufweist.

13. Schiff nach Anspruch 12, wobei das gekrümmte Blasenerzeugungselement (60) gelenkig mit dem Rumpf verbunden ist, der mit einem Antriebselement (75) zum Variieren einer Position des Elementes verbunden ist.

## Revendications

1. Procédé de génération d'une couche de bulles (14) sur une coque (2) d'un navire à **déplacement** comprenant les étapes consistant à :
- former une cavité (6) sur la **surface** de fond (3) du navire (1), ayant une longueur d' au moins 1 m et ne dépassant pas 30 % de la longueur L du navire le long du fond, de préférence ne dépassant pas 25 %, idéalement ne dépassant pas 10 % de la longueur L du navire, et possédant une surface supérieure éloignée d'au moins 50 cm de la **surface** de fond (3), de préférence éloignée d'au moins 1 m de la **surface** de fond (3),
- apporter de l'air dans la cavité par l'intermédiaire d'un dispositif de compression (12) à une pression supérieure à la pression atmosphérique afin de vider au moins partiellement la cavité d'eau, **caractérisé par**
- la formation d'une **surface** d'interface eau-air dans la cavité formant une région de mélange,
- la génération d'une pluralité de bulles d'air dans la région de mélange, et
- la formation d'une sortie (15) de bulles au niveau ou près du **côté** arrière **inférieur** (17) de la cavité (6) pour permettre aux bulles de s'écouler **depuis la région de mélange** le long de la **surface de fond** (3) vers l'arrière du navire.

2. Procédé selon la revendication 1, dans lequel les bulles ont une taille comprise entre 10 micromètres et 1 mm.

3. Procédé selon la revendication 1 ou 2, dans lequel la sortie (15) de bulles est formée au niveau d'une extrémité arrière d'une surface supérieure inclinée (16) de la cavité (6) s'inclinant vers le bas depuis une hauteur de surface supérieure vers le plan de fond dans une direction vers l'arrière vue le long du plan de fond.

4. Procédé selon la revendication 1, 2 ou 3, dans lequel la pression de l'air introduit dans la cavité est régulée pour être au moins à peu près aussi élevée que la pression d'air à l'intérieur de la cavité.

5. Procédé selon la revendication 1, 2, 3 ou 4, dans lequel la vitesse de l'eau à l'intérieur de la cavité est à peu près aussi élevée qu'une vitesse d'avancement du navire.

6. Navire (1) à **déplacement** possédant une coque (2) avec une surface de fond **(3)** et une cavité (6, 40, 40¹) s' étendant vers le haut depuis la surface de fond (3) jusqu' à une surface supérieure éloignée d' au moins 50 cm de la surface supérieure et s'étendant jusqu'à une hauteur ne dépassant pas 10 % d'une hauteur Hₑ du navire, et ayant une longueur supérieure à 1 m et ne dépassant pas 30 % de la longueur L du navire le long du fond, de préférence ne dépassant pas 25 %, idéalement ne dépassant pas 10 % de la longueur L du navire, un dispositif de compression (12) destiné à apporter de l'air dans la cavité (16) **à un débit sensiblement constant et à une** pression supérieure à la pression d'air dans la cavité afin de vider au moins partiellement la cavité d'eau, **pour former une surface d'interface eau-air** dans la cavité **formant** une région de mélange L pour générer une pluralité de petites bulles dans la région de mélange, et possédant une sortie (15) de bulles au niveau ou près d'une extrémité arrière **inférieure** (17) de la cavité pour permettre aux bulles de s'écouler le long de la **surface de fond** (3) vers l'arrière du navire.

7. Navire selon la revendication 6, dans lequel la surface supérieure (16) s'incline vers le bas depuis une hauteur de surface supérieure vers le plan de fond dans une direction vers l'arrière vue le long du plan de fond, vers une région d'écoulement sortant de bulles.

8. Navire (1), **selon la revendication 6 ou 7**, une unité de commande (28) **étant** reliée au dispositif de compression **(12)** pour apporter sélectivement de l'air dans la cavité à une pression supérieure à la pression d'air dans la cavité pour maintenir un niveau d'eau prédéfini à l'intérieur de la cavité, un second moyen d'alimentation en air (20, 21, 22, 25, 26) s'étendant jusqu'à la région de mélange de la cavité pour apporter l'air dans la région de mélange à un débit sensiblement continu.

9. Navire (1), **selon la revendication 6**, **7 ou 8**, deux cavités étant situées côte à côte et séparées par une région de séparation (46'), un dispositif de génération (43, 44) de bulles étant situé dans la région de séparation (46'), une réserve d'air (26) étant reliée au dispositif de génération de bulles pour apporter de l'air au dispositif de génération (43, 44) afin de produire une pluralité de petites bulles.

10. Navire (1), selon la revendication 5, 6, 7 ou 8, dans lequel au moins deux dispositifs de génération (20, 21, 22, 50, 51, 52) de bulles se situent dans la cavité, espacés d'une distance mutuelle dans la direction de longueur du navire.

11. Navire selon la revendication 10, chaque dispositif de génération de bulles comprenant une réserve d'air pouvant être individuellement fermée par le biais d'un clapet (30, 31, 32).

12. Navire selon l'une quelconque des revendications **6-11**, comprenant un organe de génération (60) de bulles incurvé à l'intérieur de la cavité (61).

13. Navire selon la revendication **12**, l'organe de génération (60) de bulles incurvé étant relié de façon articulée à la coque, relié à un organe d'entraînement (75) pour faire varier une position de l'organe.
